# EUROPEAN PATENT SPECIFICATION

(11) **EP 1 148 604 B1**
(45) Date of publication and mention of the grant of the patent: **26.10.2005**
(21) Application number: 01115952.2
(22) Date of filing: 25.01.1996
(51) Int. Cl.: H02G 3/10, H02G 3/18

(54) **Electric outlet box**
Elektrische Steckdose
Boîtier pour prise de courant

(30) Priority: 02.02.1995 US 382603; 02.02.1995 US 382887
(43) Date of publication of application: 24.10.2001
(62) Divisional of application: 96902758.0
(73) Proprietor: THE WIREMOLD COMPANY, West Hartford, CT 06133-2500 (US)
(72) Inventor: Cancellieri, Salvatore A., Plainville CT 06062 (US); Rogers, Wilfred, R., Bristol, CT 06010 (US)
(74) Representative: Menges, Rolf

(56) References cited:
- US-A- 4 983 785
- US-A- 5 170 013

## Description

The present invention relates to the fabrication of molded plastic electric outlet boxes, and relates more specifically to an improved electric outlet enclosure of the type having a plurality of components one of which is a universal base for receiving boxes of different depth. The box is configured to receive snap-on face plate. The molded plastic box is also adapted to receive conventional electric devices such as duplex plugs or switches with simplified push-in fastener openings that do not require threading the fasteners in place.

Plastic frames for the mounting of interchangeable electrical devices are known in the art. For example, US-A-3,964,705 illustrates a molded one piece frame having resilient integrally molded posts that flex outwardly to receive electrical devices to be mounted in the frame. This US patent does not show or suggest an enclosure defined by a base and a snap-on box for housing an electrical component and that permits one of a plurality of boxes to be used on a single universal frame or base.

US-A-3,689,868 illustrates a snap-on face plate which defines a cord enclosure in conjunction with another enclosure component. Cooperating posts are defined in part both on the face plate and on the other component. However, the '868 patent disclosure does not relate to a multicomponent enclosure for mounting an electrical device or duplex plug. This patent merely shows a fixed frame around which an electrical cord can be wound. In this US patent there is no suggestion for a base plate adapted to receive a molded box suitable for housing a duplex plug or switch.

US-A- 4,500,746 shows a self-contained electrical device that is designed to eliminate the need for a molded plastic outlet box altogether. The electric device, such as a switch, is received on a base that is in turn provided with wires that are so located as to engage contacts provided in the switch. The switch is designed to be assembled with a base by means of resilient upstanding posts that latch into appropriate openings defined for them in the frame or base.

US-A- 4,857,669 shows a plurality of integrally molded posts 42, each of which has a notched end 44 adapted to receive a projecting portion of an electrical component to be assembled therewith. This patent like the above mentioned prior art patents merely shows that it is old to provide resilient posts with latches adapted to be received in openings provided for this purposes in another component to be assembled therewith.

US-A-5,170,013 (on which the preamble of independent claim 1 is based) and US-A-5,170,014 disclose an electrical outlet box with molded plastic end walls defining threaded fastener openings adapted to receive a fastener by simply pushing the fastener into the opening. The fastener openings have integrally formed threads provided in the molded plastic so once the fastener has been pushed into place removal requires that the fastener be unthreaded. The subject application shows for the first time how a push in fastener can be used with a molded plastic outlet box without the need for threads being formed in the plastic itself. In the structure disclosed herein greater resilient flexibility is provided for the plastic fastener hole defining portion. Each such portion defines a hole which is tapered in cross-sectional size from an enlarged entry end into a necked-down star-shaped inner-end.

US-A-4,983,785 shows a molded plastic outlet box having end walls that define three outwardly open slots, the middle slot having an enlarged hole for receiving a fastener equal in length to the axial extent of the hole. This fastener hole has a threaded outer or upper axial end portion and a reduced diameter inner portion that requires self tapping by rotation of the threaded fastener. In the present invention the fastener hole need not be threaded, nor is it defined by outwardly open slots.

The object of the present invention is to improve electrical outlet boxes particularly in such a way that the electrical devices remain in a secure condition within the box. This object is achieved by the invention as claimed in present independent claim 1. Further embodiments and subject of the dependent claims 2 to 7.

In accordance with the present invention an electric outlet box is disclosed having side and end walls integrally molded to a top wall that not only defines an opening for receiving an electrical device such as a plug or switch, but which also includes end portions adjacent to the end walls of the outlet box that are divided into generally equal area sectors by a bisector slot having an open end communicating with the electrical device opening. A cross-slot is oriented transversely to this bisector slot whereby downward pressure on a fastener associated with the electrical device depresses sectors of the top wall end portion by pivoting of these sectors along flex lines oriented parallel the bisector slot. This geometry serves to permit ready insertion of a fastener in an associated fastener hole followed by a gripping action on the fastener once the fastener has been pushed into place to hold the electrical device in its opening.

Generally, the present invention provides a molded generally rectangular base with upstanding locating legs and upstanding structural posts integrally formed in the base, and a plurality of molded rectangular boxes or covers of different depth that are downwardly open and adapted to receive these upstanding legs and posts. The box side walls define inwardly projecting tabs or lugs that are adapted to be received in channel shaped openings of the posts to secure the cover or box to the base. The upstanding posts that provide the structural support with the side walls of the cover or box do not flex, and instead each box is configured with a relatively large opening in its top wall to allow flexing of the side walls during assembly.

The present invention provides for access openings in the top wall of the cover or box so as to permit the use of a screw driver or other tool to be inserted in these access openings for releasing the outlet box or cover from the underlying frame or base.

Further, the present invention provides a unique snap-on configuration for assembling a face plate to the cover or box without the need for conventional fasteners.

Still further the present invention provides for quick mounting of a conventional electrical device such as a duplex plug or a switch by the use of conventional fasteners that need only to be pushed in place into openings provided for them in the box or cover. The configuration of the openings or holes for receiving the fasteners is such that the box or cover deforms resiliently to receive the fasteners when they are pushed in place. The box resiliently returns to a locking position to securely hold the fasteners once they have been pushed into their associated holes or openings.

A more complete understanding of the invention and many of its attendant advantages will be readily appreciated as the same become better understood by reference to the following detailed description when considered in conjunction with the accompanying drawings wherein:
Figure 1 is an exploded top perspective view of the components of an outlet box constructed in accordance with the present invention, and also shows an electrical device of the duplex plug type for mounting in this outlet box. A slightly larger box is shown in phantom lines.
Figure 1A is a bottom perspective view of the same components of the outlet box constructed in accordance with the present invention, and also shows the electrical device of the duplex plug type for mounting in this outlet box. Again, the somewhat deeper box is shown in phantom lines.
Figure 2 is a top plan view of the downwardly open box component of Figure 1.
Figure 3 is a sectional view taken on the line 3,3 of Figure 2.
Figure 4 is a bottom plan view of the Figure 2 box.
Figure 5 is a sectional view taken on the line 5,5 of Figure 2.
Figure 6 is a bottom plan view showing to a somewhat larger scale than Figure 4 one of the bosses for receiving one of the two fasteners normally provided with an electrical device of the type illustrated in Figures 1 and 1A.
Figure 7 is a sectional view showing to a somewhat larger scale the fastener hole configuration as defined by the box of Figure 6.

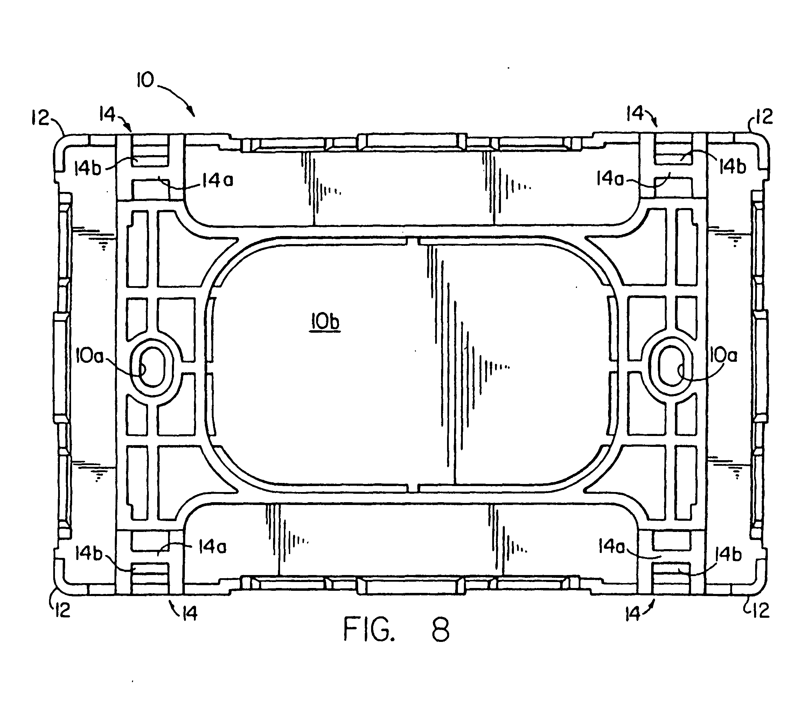

Figure 8 is a top plan view of the base or frame for receiving the box of Figures 2 through 7.
Figure 9 is a side elevational view of the base shown in Figure 8.
Figure 10 shows the fastener hole of Figure 5 in an undeformed position (left side) and during deformation due to inserting a fastener (right side).

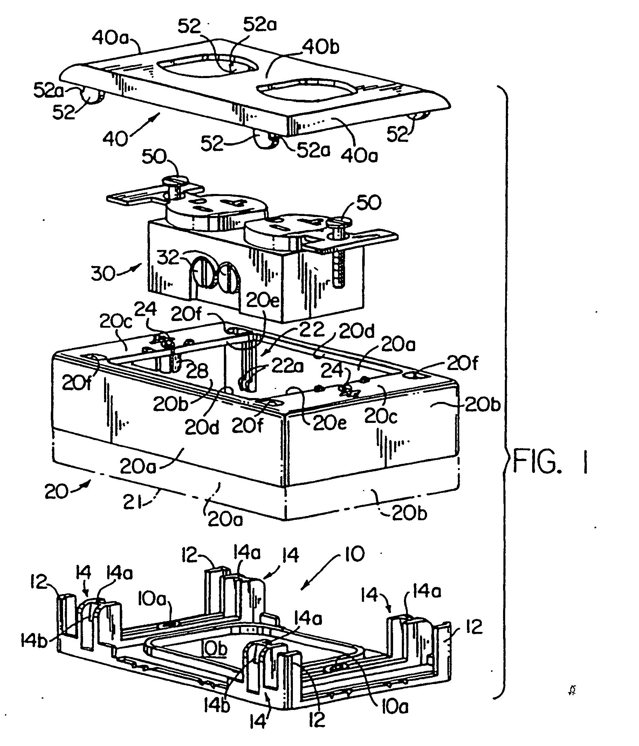

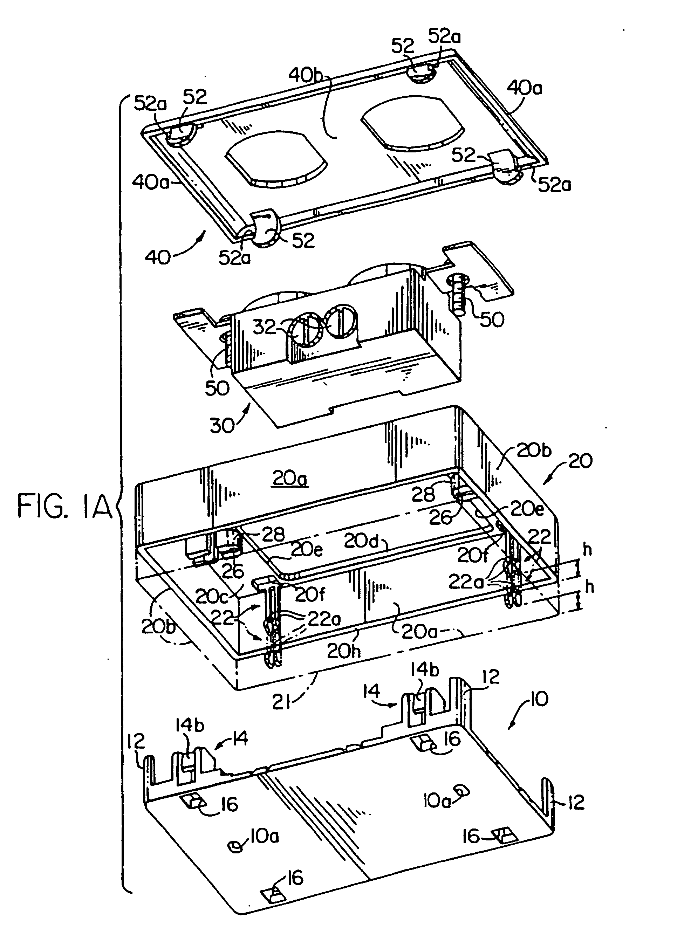

Turning now to the drawings in greater detail, and referring specifically to Figure 1, an electrical outlet box constructed of components capable of being assembled in accordance with the present invention is shown in exploded relationship, and with an electrical device 30 included for reference purposes.

As shown, three components of an electrical outlet box are depicted in Figure 1, a base or frame 10, a downwardly open box or cover 20, and a face plate 40. An electrical device 30 is adapted to being quick mounted in the box 20 according to the invention.

The molded plastic base or frame 10 has openings indicated generally at 10a, for receiving mounting screws (not shown) that provide a convenient means for attaching the base 10 to an existing wall structure or baseboard. A knock-out panel 10b provides an opening for wires (not shown) that would be connected conventionally to an electrical device 30, such as the duplex plug illustrated at 30. Screws 32,32 are provided for this purpose on the plug.

Still with reference to Figure 1 the molded plastic frame or base 10, has four upstanding locating legs 12,12 provided at the four corners of the generally rectangular base so as to be received at the four interior corners of the downwardly open rectangular box or cover 20. In accordance with the invention four relatively rigid upstanding posts 14,14 are provided adjacent these locating legs 12,12. Each post 14 is generally H-shaped in cross-section, and thus defines an outwardly open channel. The web portion 14a of each channel shaped post (14) defines an inclined cam surface 14b for receiving a rib 22 defined for this purpose on the interior side walls of the downwardly open box 20. Each of these channel shaped web portions 14a has an opening with a lower edge that is adapted to receive abutment surfaces 22a defined for this purpose in the ribs 22 of the cover or box 20. The base 10 also has four access ports 16 for receiving a screwdriver (not shown) that can be inserted and twisted to facilitate disassembly of the cover or box 20.

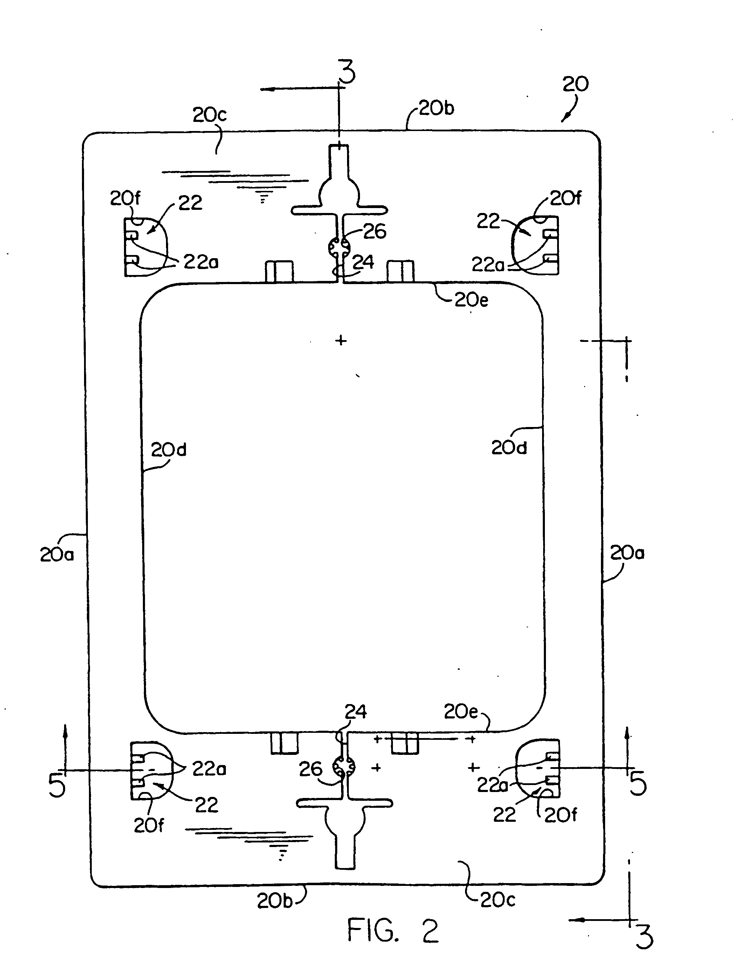

Turning now to a more detailed description of the molded plastic cover or box 20, Figure 2 shows the box 20 as an integrally molded component including integrally molded side walls 20a and end walls 20b together with an integrally molded top wall defined essentially by top wall end portions 20c. Thus, box 20 includes a large generally rectangular top opening for receiving the electrical device 30 or outlet plug. Conventional duplex plugs of the type shown generally include threaded fasteners such as indicated generally at 50 in Figure 1. Such fasteners 50 comprise one or another standard electrical thread. However, these common thread sizes will generally have a common diameter. The number of threads per mm may vary but the fasteners will have the same general diameter. The present invention provides unique fasteners openings for receiving such differently threaded fasteners. These openings are defined in the top wall end portions 20c of the molded plastic box 20 and will be described in greater detail hereinafter.

Still with reference to Figure 2, the generally rectangular molded plastic box 20 defines a generally rectangular top opening with opposed edges 20e defined by the facing edges of the top wall end portions 20c. Further, the rectangular top opening also includes longer opposed edges 20d oriented parallel to the side walls 20a of box 20, and preferably located in close proximity to the side walls 20a so as to allow for resilient flexibility of the side walls 20a, at least between the top wall end portions 20c,20c. It is this flexibility of the side walls 20a that allows the necessary clearance for the ribs 22, and more particularly the abutment surfaces 22a thereof to pass by the cam surface 14b of the channel shaped post 14 in the base 10 during assembly of the box 20 with the base 10. These ribs 22 are located beneath the top wall end portions 20c of the box 20. Openings 20f are provided above these ribs in each top wall end portion 20c to allow insertion of a screwdriver to release the box 20 from the base 10. As best shown in Figure 1A, the vertical height of the box or cover 20 may vary. See the deeper box 21 shown in phantom lines. It is otherwise identical to the box 20, except for the length of the ribs 22. The deeper box 21 has ribs long enough to define the same space between the ribs 22 and the bottom edge of both boxes. See the dimension "h" illustrated in Figure 1A. As so constructed and arranged boxes of various depths can be fitted with the same base or frame 10. It is an important feature of the present invention that an elongated bisector slot 24 is provided the full width of each top wall end portions 20c, that is between the edge 20e of the opening in the top wall and the inside of the end wall 20b of the box 20. These bisector slots 24,24 assure that the longer side walls 20a of the box 20 will move outwardly upon assembly of the cover with the base, and will resiliently contract following assembly of these components.

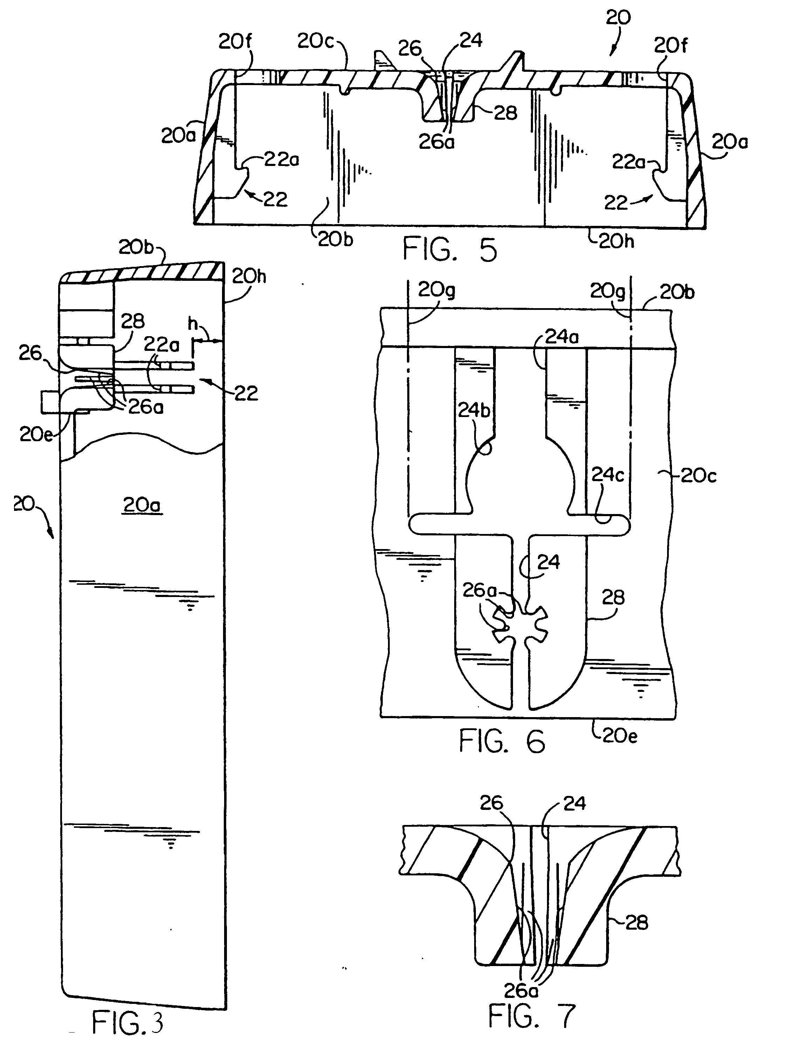

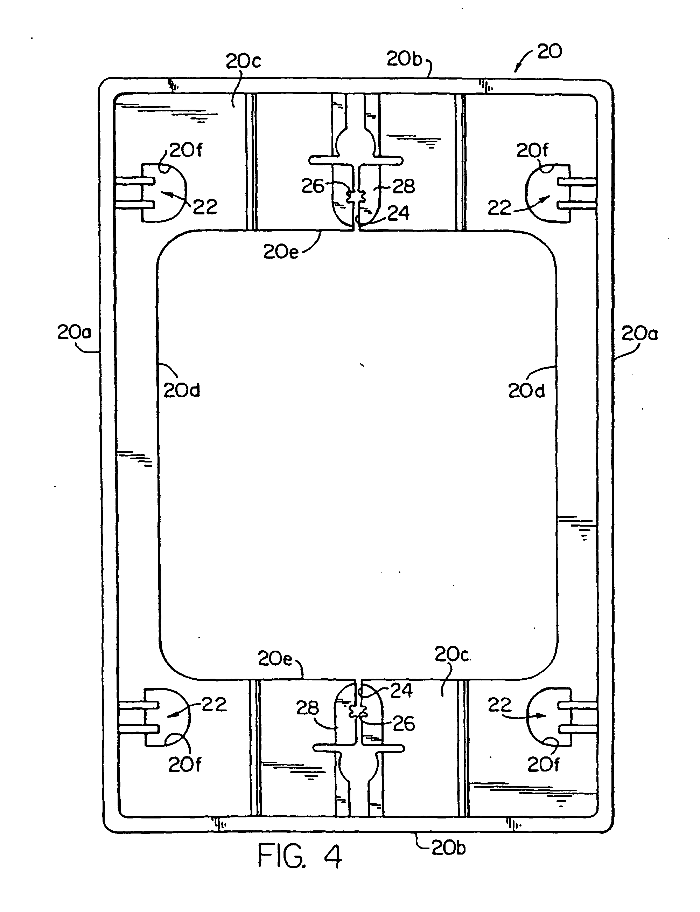

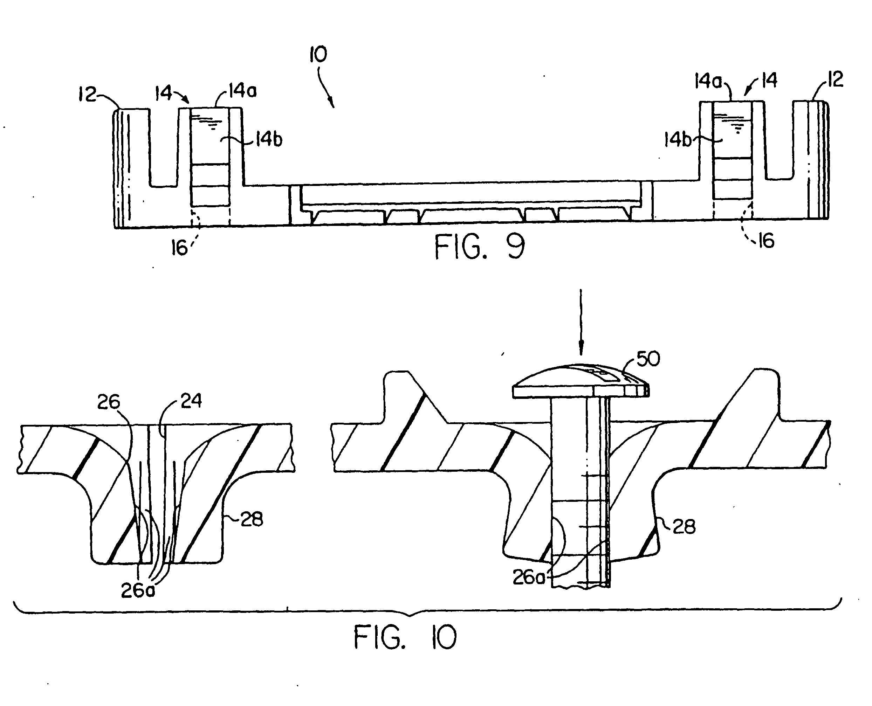

Turning now to a more detailed description of each of the bisector slots 24 in each top wall end portion 20c of the box 20, each bisector slot 24 has an enlarged region that appears from the top view of Figure 2 to have a generally circular contour, but which in the bottom plan view of Figure 4 can be seen to have a generally star-shaped configuration. More specifically, and with particular reference to Figure 5, the slot 24 and particularly the enlarged region thereof is provided with a vertical extent or height that is enhanced by a boss 28 provided integrally with the top wall end portion 20c. This boss 28 defines a tapered fastener opening or hole 26 that affords progressively more gripping force on the threaded fastener 50 as the fastener 50 is inserted therein. The enlarged region or fastener hole 26 is designed to receive the fastener 50. However, and as suggested in Figure 10, the tapered ribs 26a grip the fastener threads at assembly of the electrical outlet plug with the cover or box 20. Still with reference to the unique configuration for the fastener hole 26 defined by the boss 28, it will be apparent from Figure 5 and Figure 6 that the overall cross-sectional size of this hole varies from a maximum at the top surface of the cover or box in Figure 5 to a minimum at the lower or inner end of the boss 28. Thus, the overall configuration for the hole is generally not cylindrical, the presence of the tapered radially inwardly extended ribs 26a provides for significant engagement or gripping forces between the threaded fastener (50) and the unthreaded fastener hole 26 in the boss 28. As the fastener 50 is inserted, by a pushing action into the fastener hole 26, the bisector slot 24 expands slightly. Once in place the resilient side walls 20a of the box (20) hold the fastene 50 in this unique fastener hole 26.

Referring now specifically to Figure 6, the boss 28 can be seen to define, at least in part the bisector slot 24, and the bisector slot 24 extends from the edge 20e of the electrical outlet opening to the inside of the end wall 20b. This slot configuration takes advantage of the inherent resilience of the side walls 20a of the box 20 as mentioned previously, and provides for enlargement of the bisector slot 24 and consequently of the fastener hole 26 defined by the boss 28 as the fastener 50 is inserted. The bisector slot 24 and associated fastener hole 26 are therefor adapted to slidably receive the threaded fastener 50 without any necessity for threading. However, unthreading is preferably required for removal of these fasteners 50.

The flexibility of the side walls 20a of the box 20, in combination with the bisector slot 24 extending from the edge 20e of the rectangular opening in the top wall of the box 20 through to the end wall 20b of the box 20 affords the capability of expanding and contracting the width dimension of the bisector slot 24 enhancing enlargement of the diameter of the fastener hole 26 in order to facilitate assembly of the threaded fastener 50 in this fastener hole 26, and also assures the necessary clamping force by the boss 28 on the fastener 50 after assembly, so that unthreading of the fastener 50 may be required in order to achieve disassembly of the electrical device 30 and box 20.

With particular reference to Figure 6, the bisector slot 24 includes inner slot portions 24a and 24b that are of larger width than the bisector slot 24 associated with the enlarged region defining the actual fastener hole 26 for the fastener 50. These inner slot portions 24a and 24b are wide enough to eliminate waste of the material otherwise required to mold the boss 28 in the area of the slot between the enlarged region or fastener hole 26 and the end wall 20b of the cover or box 20. As a result of this enlarged inner slot configuration in the top wall end portion 20c of the box 20 disassembly of the electrical device 30 from the cover or box 20 is facilitated. This enlarged inner slot configuration allows insertion of a tool such as a screwdriver for prying the split portions of the boss 28 apart in order to allow for removal of the fastener 50 without necessarily requiring the unthreading mentioned previously. That is, with the face plate 40 removed and with the electrical outlet or duplex plug installed in the box 20 a screw driver can be placed into the enlarged inner slot portions 24a and 24b with the result that the blade of the screw driver can be twisted causing the bisector slot 24 to spread and hence the diameter of the fastener hole 26 to be increased sufficiently for allowing removal of the fastener 50 without unthreading the same.

With reference to Figure 10, the capability for the fastener hole 26, to expand to receive the fastener 50 as a result of the fastener 50 being pushed into the fastener hole 26 is an important feature of the present invention. This feature can be achieved not only by flexing the side walls 20a of the box 20 as described previously, but also by providing for downward flexing movement of the fastener hole defining regions of the top wall end portions 20c adjacent to the bisector slot 24. A cross-slot 24c, best shown in Figure 6, is provided transversely of the bisector slot 24. The bisector slot 24 has the enlarged inner slot portion 24a and 24b as described previously. The cross-slot 24c cooperates with the opening edge 20e to define sectors of the top wall portion 20c that flex along flex lines 20g,20g (Figure 6) thereby providing a convenient means to achieve depression of the region around the fastener hole 26 of the top wall end portion 20c.

Thus, this cross-slot 24c configuration, when taken in combination with the aforementioned resilient flexibility for the side walls 20a, as described previously, provides very effective resilient enlargement of the bisector slot 24 and the associated fastener hole 26 followed by contracting of the slot and hole to create the desired gripping forces for the molded boss 28 on the fastener 50 to assure that the electrical device 30 remains in a secure condition within the molded plastic cover or box 20.

It is important to note that no threads are defined in the molded boss 28, and that the tapered configuration of the fastener hole 26, created by the tapered ribs 26a defined on the inside surface of the fastener hole 26, obviates the need for any requirement that a thread be formed in the plastic material. Furthermore, the fact that no threads need be formed in the plastic material also allows for fasteners of different thread size to be received in the same molded fastener opening without sacrificing to the security achieved in the assembly of these components.

Turning now to a description of the face plate 40, this molded plastic component of the outlet box of the present invention need not be secured to the underlying box 20 by a conventional fastener, but is instead adapted to be secured to the box 20 as a result of integrally molded feet or legs 52,52 provided adjacent the opposite ends 40a of the face plate 40. The plastic material of the face plate 40 is resiliently flexible so that the plate can bend along its longer dimension in order that the plate 40 center portion 40b be pushed downwardly toward the top of the cover or box 20 with the result that the curved lower edges of the feet or legs 52 enter the openings 20f defined for this purpose in the top wall end portions 20c. The resilient flexibility of the face plate 40 allows sufficient bending so that the feet or legs 52 will enter these openings 20f, after which the plate returns to the unstressed planar configuration shown. The abutments 52a of the feet or legs 52 then engage the underside of the top wall end portions 20c. Removal of the face plate 40 is accomplished by inserting a screw driver or other blunt instrument between the face plate center portion 40b and the box 20 and twisting the screwdriver to bend the face plate 40 in the opposite direction. If desired a clearance or relief slot can be provided in the face plate or cover to allow the screwdriver to be more easily inserted between the box 20 and the face plate 40 so as to bend the face plate 40 until the abutments 52a in the feet or legs 52 clear the underside of the top wall end portions 20c allowing the face plate 40 to be disassembled from the box.

It is a further feature of the present invention that the openings 20f in the top wall end portions 20c of the cover or box 20 are aligned with the ribs 22 provided in the inside walls 20a of the cover 20. Thus, disassembly of the cover or box 20 from the base or frame 10 is made possible by the use of the same screwdriver or blunt instrument being inserted in these openings 20f to separate the face plate from the cover.

It is important to note that the height of the cover or box 20 is such that it will accommodate a typical electrical device such as an outlet plug or switch. However, if a larger electrical device is to be utilized in a box of this type the same frame or base 10 can be used to receive a box of greater or lesser height provided only that the ribs 22 and more particularly the abutment surfaces 22a are provided in the same vertically spaced relationship (h) to the bottom edge 20h of the box 20. In accordance with the invention, a plurality of boxes of different vertical dimension can be accommodated on the same base 10 as suggested by the phantom lines in Figures 1 and 1A of the drawings. Furthermore, the same face plate 40 can be used with boxes of different height as well. Obviously, the face plate 40 would have a different opening configuration in the event that the electrical outlet device being accommodated in the box 20 were a switch rather than a duplex outlet plug as shown in the drawings. Other devices might be mounted in a box of the type shown and described herein. Any electrical device, such as a jack or telecommunications connector, or groups of them, could be accommodated in a box or cover constructed in accordance with the teachings of this disclosure.

## Claims

1. An electrical outlet box comprising;
side and end walls (20a, 20b) integrally molded to a top wall thereof,
said top wall defining an electrical device opening having end edges (20e) spaced from said end walls (20b),
said top wall including end portions (20c) between said end walls (20b) and said end edges (20e) of said device opening,
each top wall end portion (20c) defining a bisector slot (24) including an enlarged region spaced from said open end to define a fastener hole (26),
**characterised in that**
each said bisector slot (24) has an open end communicating with said device opening and provides equal area top wall end portion sectors on either side of said bisector slot (24),
each said sector more particularly defined by a cross-slot (24c) oriented transversely to said bisector slot,
whereby downward pressure of a fastener (50) pushed into said fastener hole (26) provides a force fit for the fastener (50) causing said top wall end portion sectors to pivot along flex lines (20g) parallel said bisector slot (24), said flex lines (20g) oriented transversely of said cross-slots (24) and in the same general plane as that defined by said bisector and cross-slots (24, 24c) in each top wall end portion (20c).

2. The electrical outlet box according to claim 1 wherein
said side walls (20a) are resiliently flexible in bending, said resilient side walls (20a) defining said flex lines (20g) oriented transversely of said cross-slots (24c) to exert a gripping force on said fasteners (50) as a result of an interference fit provided between said fastener (50) and said fastener hole (26).

3. The electrical outlet box according to claim 1 or 2 wherein said top wall end portions (20c) defining said bisector slots (24) include a boss (28) in the region of said enlarged region defining said fastener hole (26),
each said fastener hole (26) having a cross-sectional size that varies along the axis of the hole (26), the upper axial end of said hole being outwardly flared to guide the fastener (50) into the hole (26), and the lower axial end of said hole (26) being star-shaped and of reduced cross-section to provide an interference fit for the fastener (50).

4. The electrical outlet box according to any one of claims 1 to 3 wherein said electrical device opening has side edges (20d) arranged parallel to and approximate said side walls (20a) to provide resilient flexibility for said side walls (20g) in order to facilitate limited resiliently flexible movement of said top wall end portion sectors in said plane and corresponding widening or narrowing of said bisector slots (24), whereby downward pressure from the fastener (50) pushed into said fastener hole (26) provides a force fit as aforesaid and also causes said sectors to move apart relative one another thereby further widening said bisector slot (24), and whereby reactive gripping forces are exerted on the fastener (50) after being pushed into said fastener hole (26).

5. The electrical outlet box according to claim 4 wherein said bisector slots (24) have closed ends opposite said open ends,
said closed ends located adjacent said box end walls (20b) whereby to afford access with a tool such as screwdriver to widen said bisector slot (24) and permit quick release of the fastener (50) from the fastener hole (26).

6. The electrical outlet box according to any one of claims 3 to 5 wherein said reduced cross-sectional size of said fastener enlarged hole (26) at the lower axial end of said boss (28) has a star-shaped cross-sectional shape defined by inwardly projecting ribs (26a).

7. The electrical outlet box according to claim 6 wherein
said ribs (26a) defined by said boss (28) are tapered inwardly at each said fastener hole (26) so that a lower end of said boss (28) defines abutments (52a) that engage the threads of the threaded fastener (50) to prevent its inadvertent removal.

## Patentansprüche

1. Elektrische Auslassdose mit:
Seiten- und Endwänden (20a, 20b), die an einer oberen Wand derselben angeformt sind,
wobei die obere Wand eine Öffnung, die von den Endwänden (20b) beabstandete Endränder (20e) hat, für eine elektrische Vorrichtung begrenzt,
wobei die obere Wand Endteile (20c) zwischen den Endwänden (20b) und den Endrändern (20e) der Vorrichtungsöffnung aufweist,
wobei jeder Endteil (20c) der oberen Wand einen Halbierungslinienschlitz (24) begrenzt, der ein erweitertes Gebiet mit Abstand von dem offenen Ende aufweist, um ein Befestigungselementloch (26) zu bilden,
**dadurch gekennzeichnet,**
**dass** jeder Halbierungslinienschlitz (24) ein offenes Ende hat, das mit der Vorrichtungsöffnung in Verbindung steht und Sektoren der Endteile der oberen Wand mit gleicher Fläche auf beiden Seiten des Halbierungslinienschlitzes (24) bereitstellt, wobei jeder Sektor mehr insbesondere durch einen Querschlitz (24c) gebildet wird, der quer zu dem Halbierungslinienschlitz ausgerichtet ist, wodurch Abwärtsdruck eines Befestigungselementes (50), das in das Befestigungselementloch (26) gedrückt wird, einen Festsitz für das Befestigungselement (50) schafft, der bewirkt, dass die Sektoren der Endteile der oberen Wand sich längs Biegelinien (20g) verschwenken, die zu dem Halbierungslinienschlitz (24) parallel sind, wobei die Biegungslinien (20g) quer zu den Querschlitzen (24) und in derselben allgemeinen Ebene wie diejenige, die durch die Halbierungslinien- und Querschlitze (24, 24c) in jedem Endteil (20c) der oberen Wand gebildet wird, ausgerichtet sind.

2. Elektrische Auslassdose nach Anspruch 1, wobei die Seitenwände (20a) beim Biegen elastisch flexibel sind, wobei die elastischen Seitenwände (20a) die Biegelinien (20g) bilden, welche quer zu den Querschlitzen (24c) ausgerichtet sind, um eine Einspannkraft auf die Befestigungselemente (50) als ein Ergebnis eines Presssitzes auszuüben, der zwischen dem Befestigungselement (50) und dem Befestigungselementloch (26) geschaffen wird.

3. Elektrische Auslassdose nach Anspruch 1 oder 2, wobei die Endteile (20c) der oberen Wand, welche die Halbierungslinienschlitze (24) begrenzen, einen Ansatz (28) in dem Bereich des erweiterten Gebietes aufweisen, welches das Befestigungselementloch (26) bildet,
wobei jedes Befestigungselementloch (26) eine Querschnittsgröße hat, die längs der Achse des Loches (26) variiert,
wobei das obere axiale Ende des Loches sich nach außen erweitert, um das Befestigungselement (50) in das Loch (26) zu führen, und wobei das untere axiale Ende des Loches (26) sternförmig ist und einen verringerten Querschnitt hat, um einen Presssitz für das Befestigungselement (50) zu schaffen.

4. Elektrische Auslassdose nach einem der Ansprüche 1 bis 3, wobei die Öffnung für die elektrische Vorrichtung Seitenränder (20d) hat, die parallel zu und nahe bei den Seitenwänden (20a) angeordnet sind, um für eine elastische Flexibilität der Seitenwände (20a) zu sorgen, damit eine begrenzte elastisch biegsame Bewegung der Sektoren der Endteile der oberen Wand in der Ebene und ein entsprechendes Erweitern oder Verschmälern der Halbierungslinienschlitze (24) erleichtert wird, wodurch Abwärtsdruck von dem Befestigungselement (50) her, das in das Befestigungselementloch (26) gedrückt wird, wie zuvor gesagt einen Festsitz ergibt und auch bewirkt, dass sich die Sektoren relativ zu einander auseinander bewegen, um **dadurch** den Halbierungslinienschlitz (24) weiter zu verbreitern, und wodurch reaktive Einspannkräfte auf das Befestigungselement (50) ausgeübt werden, nachdem dieses in das Befestigungselementloch (26) gedrückt worden ist.

5. Elektrische Auslassdose nach Anspruch 4, wobei die Halbierungslinienschlitze (24) entgegengesetzt zu den offenen Enden geschlossene Enden haben,
wobei die geschlossenen Enden an den Dosenendwänden (20b) angeordnet sind, wodurch einem Werkzeug wie einem Schraubendreher Zugang gewährt wird, um den Halbierungslinienschlitz (24) zu erweitern und ein schnelles Lösen des Befestigungselements (50) aus dem Befestigungselementloch (26) zu gestatten.

6. Elektrische Auslassdose nach einem der Ansprüche 3 bis 5, wobei die verringerte Querschnittsgröße des erweiterten Befestigungselementloches (26) an dem unteren axialen Ende des Ansatzes (28) eine sternförmige Querschnittsform hat, die durch einwärts vorstehende Rippen (26a) gebildet wird.

7. Elektrische Auslassdose nach Anspruch 6, wobei die Rippen (26a), die durch den Ansatz (28) gebildet sind, sich in jedem Befestigungselementloch (26) konisch nach innen verjüngen, so dass ein unteres Ende des Ansatzes (28) Widerlager (52a) bildet, welche das Gewinde des mit Gewinde versehenen Befestigungselementes (50) erfassen, um dessen unbeabsichtigtes Entfernen zu verhindern.

## Revendications

1. Boîte de prise électrique comportant :
des parois latérales et extrêmes (20a, 20b) moulées d'une seule pièce avec une paroi supérieure de la boîte,
ladite paroi supérieure définissant une ouverture de dispositif électrique ayant des bords extrêmes (20e) espacés desdites parois extrêmes (20b),
ladite paroi supérieure comprenant des parties extrêmes (20c) entre lesdites parois extrêmes (20b) et lesdits bords extrêmes (20e) de ladite ouverture pour dispositif,
chaque partie extrême (20c) de la paroi supérieure définissant une fente bissectrice (24) comprenant une région élargie espacée de ladite extrémité ouverte pour définir un trou (26) pour un organe de fixation,
**caractérisée en ce que**
chaque fente bissectrice (24) a une extrémité ouverte communiquant avec ladite ouverture pour le dispositif et présente des secteurs de parties extrêmes de paroi supérieure d'aire égales de part et d'autre de ladite fente bissectrice (24),
chaque secteur étant plus particulièrement défini par une fente transversale (24c) orientée transversalement à ladite fente bissectrice,
grâce à quoi une pression vers le bas par un organe de fixation (50) poussé dans ledit trou (26) pour organe de fixation produit un ajustement à force pour l'organe de fixation (50) amenant lesdits secteurs de la partie extrême de la paroi supérieure à pivoter suivant des lignes de flexion (20g) parallèles à ladite fente bissectrice (24), lesdites lignes de flexion (20g) étant orientées transversalement auxdites fentes transversales (24) et dans le même plan général que celui défini par lesdites fentes bissectrice et transversale (24, 24c) dans chaque partie extrême (20c) de la paroi supérieure.

2. Boîte de prise électrique selon la revendication 1, dans laquelle
lesdites parois latérales (20a) peuvent fléchir élastiquement en se courbant, lesdites parois latérales élastiques (20a) définissant lesdites lignes de flexion (20g) orientées transversalement auxdites fentes transversales (24c) pour exercer une force de serrage sur lesdits organes de fixation (50) par suite d'un ajustement serré établi entre ledit organe de fixation (50) et ledit trou (26) pour organe de fixation.

3. Boîte de prise électrique selon la revendication 1 ou 2, dans laquelle lesdites parties extrêmes (20c) de la paroi supérieure définissant lesdites fentes bissectrices (24) comprennent un bossage (28) dans la région de ladite région élargie définissant ledit trou (26) pour organe de fixation,
chaque trou (26) pour organe de fixation ayant une dimension en section transversale qui varie le long de l'axe du trou (26), l'extrémité axiale supérieure dudit trou étant évasée vers l'extérieur pour guider l'organe de fixation (50) dans le trou (26), et l'extrémité axiale inférieure dudit trou (26) étant en forme d'étoile et de section transversale réduite pour réaliser un ajustement serré pour l'organe de fixation (50).

4. Boîte de prise électrique selon l'une quelconque des revendications 1 à 3, dans laquelle ladite ouverture pour dispositif électrique comporte des bords latéraux (20d) agencés parallèlement auxdites parois latérales (20a) et proches de celles-ci pour conférer de la flexibilité élastique auxdites parois latérales (20a) afin de faciliter un mouvement de flexion élastique limité desdits secteurs des parties extrêmes de la paroi supérieure dans ledit plan et un élargissement ou un rétrécissement correspondant desdites fentes bissectrices (24), grâce à quoi une pression vers le bas depuis l'organe de fixation (50) poussé dans ledit trou (26) pour organe de fixation produit un ajustement à force comme précité et amène aussi lesdits secteurs à s'écarter l'un de l'autre pour élargir davantage ladite fente bissectrice (24), et grâce à quoi des forces de prise réactives sont exercées sur l'organe de fixation (50) après qu'il a été poussé dans ledit trou (26) pour organe de fixation.

5. Boîte de prise électrique selon la revendication 4, dans laquelle lesdites fentes bissectrices (24) ont des extrémités fermées opposées auxdites extrémités ouvertes,
lesdites extrémités fermées étant placées de façon à être adjacentes auxdites parois extrêmes (20b) de la boîte afin de permettre l'accès à un outil tel qu'un tournevis pour élargir ladite fente bissectrice (24) et permettre une libération rapide de l'organe de fixation (50) du trou (26) pour organe de fixation.

6. Boîte de prise électrique selon l'un quelconque des revendications 3 à 5, dans laquelle ladite dimension réduite en section transversale dudit trou élargi (26) pour organe de fixation à l'extrémité axiale inférieure dudit bossage (28) a une configuration en forme d'étoile en section transversale définie par des nervures (26a) faisant saillie vers l'intérieur.

7. Boîte de prise électrique selon la revendication 6, dans laquelle
lesdites nervures (26a) définies par ledit bossage (28) sont effilées vers l'intérieur à chaque trou (26) pour organe de fixation afin qu'une extrémité inférieure dudit bossage (28) définisse des butées (52a) qui engagent les filets de l'organe fileté (50) de fixation afin d'empêcher son enlèvement accidentel.
